# EUROPÄISCHE PATENTSCHRIFT

(11) **EP 1 700 211 B1**
(45) Veröffentlichungstag und Bekanntmachung des Hinweises auf die Patenterteilung: **11.04.2007**
(21) Anmeldenummer: 04797755.8
(22) Anmeldetag: 10.11.2004
(51) Int. Cl.: G06F 9/46

(54) **LADEN VON SOFTWARE-MODULEN**
METHOD OF LOADING SOFTWARE MODULES
CHARGEMENT DE MODULES LOGICIELS

(30) Priorität: 06.12.2003 DE 10357118
(43) Veröffentlichungstag der Anmeldung: 13.09.2006
(73) Patentinhaber: DaimlerChrysler AG, 70567 Stuttgart (DE)
(72) Erfinder: SPIEGELBERG, Gernot, 71296 Heimsheim (DE); GEHRING, Ottmar, 71394 Kernen (DE); HEILMANN, Harro, 73760 Ostfildern (DE); MAISCH, Ansgar, 76275 Ettlingen (DE); SCHWARZHAUPT, Andreas, 76829 Landau (DE); SULZMANN, Armin, 68723 Oftersheim (DE)
(86) Internationale Anmeldenummer: PCT/EP2004/012687
(87) Internationale Veröffentlichungsnummer: WO 2005/055056

(56) Entgegenhaltungen:
- EP-A- 0 240 145
- US-A- 5 155 851
- US-A- 5 544 054

## Beschreibung

Die Erfindung betrifft ein Verfahren zum Laden eines Software-Moduls in eine Prozessoreinheit eines Steuergeräts in einem Verkehrsmittel, wobei das Software-Modul in mehreren Steuergeräten lauffähig ist und die Steuergeräte über einen Datenbus Daten austauschen.

In der DE 196 31 309 A1 ist eine Mikroprozessoranordnung für ein Fahrzeug-Regelungssystem mit mehreren, untereinander durch Bussysteme verbundenen Mikroprozessorensystemen offenbart.

In der US 5 544 054 und der US 5 155 851 ist jeweils ein Verfahren zum Laden: von Software-Modulen in eine Prozessoreinheit eines Steuergerätes offenbart. Die Auswahl auf welchem Steuergerät das Software-Modul geladen wird, erfolgt dabei in Abhängigkeit von der Rechenkapazität der sich aktuell in Betrieb befindenden Steuergeräte.

Die EP 240 145 A2 offenbart ein System zur Auswahl von Prozessoren zur Abarbeitung von durch Software definierten Aufgaben bei Mehrprozessor-Computersystem. Dieses Verfahren lässt sich wegen der Echtzeiterfordernisse und Rechenzeitbeschränkungen nicht ohne weiteres auf ein Verkehrsmittel übertragen.

Der Artikel "fine grained mobility in the emerald system, ACM transactions on computer systems", association for computing machinery, New York, US, 1988-02-00 offenbart die Weiterleitung von Kennungsinformationen, wie Zustand des Host, bei einem Computersystem.

Es ist die Aufgabe der vorliegenden Erfindung, die Prozessorauslastung in miteinander vernetzten Steuergeräten zu optimieren.

Diese Aufgabe wird erfindungsgemäß durch die Merkmale des Anspruchs 1 gelöst. Danach erfolgt die Auswahl auf welchem Steuergerät das Software-Modul geladen wird, in Abhängigkeit der Rechenkapazität der sich aktuell im Betrieb befindlichen Steuergeräte. Mit dem Auswahlverfahren ist sichergestellt, dass das Software-Modul auf dem geladenen Steuergerät aktuell genügend Rechenkapazität zur Abarbeitung seiner Prozesse vorfindet und nicht auf einem Steuergerät gestartet wird, auf dem aktuell nicht genügend Rechenkapazität vorhanden ist. Das Auswahlverfahren erlaubt eine gezielte Ausnutzung von freien Rechenkapazitäten in einem Verbund von Steuergeräten, welche untereinander kommunizieren können.

Bevorzugt wird die Rechenkapazität der Steuergeräte turnusmäßig oder auf Anfrage ermittelt. Dies hat den Vorteil, dass bekannt ist, welches Steuergerät aktuell über wie viel freie Rechenkapazität verfügt. Mit dieser Information kann entsprechend das Laden des Software-Moduls auf ein bestimmtes Steuergerät gesteuert werden. Die freie Rechenkapazität eines Steuergeräts ist von den aktuell von diesem Steuergerät zu bearbeitenden Aufgaben abhängig ist. Diese ist damit Schwankungen unterworfen und muss den weiteren Steuergeräten mitgeteilt werden.

Vorteilhafterweise wird die Rechenkapazität eines Steuergeräts aus der Prozessorauslastung und dem Prozessortyp ermittelt, so dass sichergestellt wird, dass selbst bei unterschiedlichen Prozessortypen die freie Rechenkapazität korrekt bestimmt wird, insbesondere nicht nur die Prozessorauslastung herangezogen wird.

Vorzugsweise wird das Software-Modul auf dem Steuergerät mit der maximalen freien Rechenkapazität gestartet, so dass nicht Steuergeräte mit weniger Rechenkapazität mit der Ausführung des einen Software-Moduls belastet werden.

Bevorzugt vergleicht das Steuergerät auf dem das Software-Modul läuft seine Rechenkapazität mit der Rechenkapazität der weiteren Steuergeräte. In Abhängigkeit des Vergleichs wird das Software-Modul von dem Steuergerät beendet oder fortgeführt. Dies hat den Vorteil, dass bei Prozessorauslastungsveränderungen an dem Steuergerät das Software-Modul abgeschalten kann.

Vorteilhaft wird bei Beendigung des Software-Moduls ermittelt, welches der weiteren Steuergeräte die maximal freie Rechenkapazität zur Verfügung stellt. Zudem wird das Software-Modul auf diesem Steuergerät gestartet.

Vorteilhafterweise ist das Software-Modul auf den Steuergeräten lauffähig, denn sonst kann das Software-Modul nicht von den Steuergeräten geladen werden. Zudem befinden sich die Steuergeräte im laufenden Betrieb. Das Laden des Software-Moduls erfolgt also zur Laufzeit zumindest des Betriebssystems und möglicherweise weiterer Software-Module, welche auf dem betreffenden Steuergerät geladen sind.

Bevorzugt sendet das Software-Modul eine Kennung über seinen Betriebszustand und sein Betriebs-Steuergerät, also eine Kennung des Steuergeräts auf dem das Software-Modul läuft, turnusmäßig oder auf Anfrage auf den Datenbus. Damit ist sichergestellt, dass die korrekte Funktion überprüft sowie die Einflussnahme auf das Software-Modul direkt erfolgen kann.

Es gibt nun verschiedene Möglichkeiten, die Lehre der vorliegenden Erfindung in vorteilhafter Weise auszugestalten und weiterzubilden. Dazu sind einerseits auf die untergeordneten Ansprüche und andererseits auf die nachfolgende Erläuterung einer Ausführungsform zu verweisen. Es sollen auch die vorteilhaften Ausgestaltungen einbezogen sein, die sich aus einer beliebigen Kombination der Unteransprüche ergeben. In den Zeichnungen ist eine Ausführungsform des erfindungsgemäßen Verfahrens und eine Vorrichtung dargestellt. Es zeigen jeweils in schematischer Darstellung,
- Fig. 1: eine Vorrichtung zur Durchführung des erfindungsgemäßen Verfahrens,
- Fig. 2: ein Verfahrensablauf zur Durchführung des erfindungsgemäßen Verfahrens und

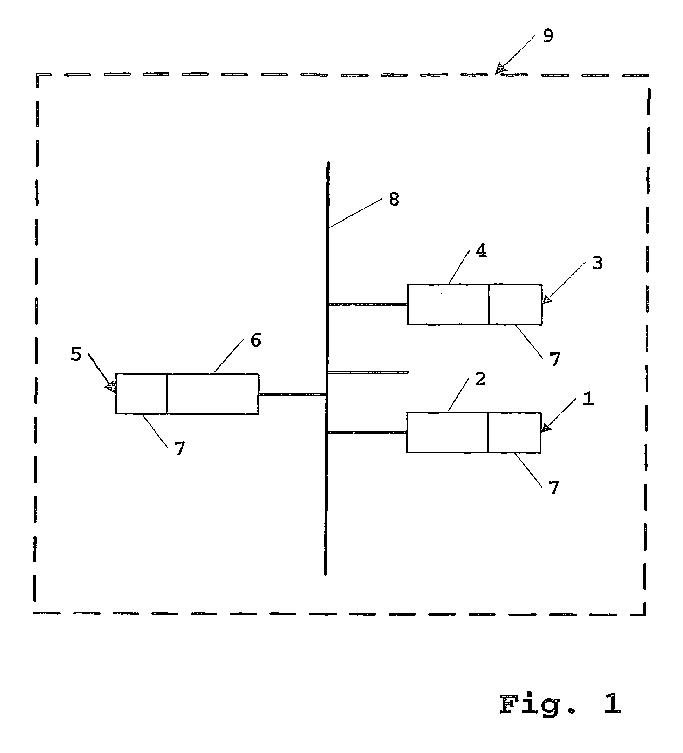

Eine Übersicht einer Vorrichtung zur Durchführung des erfindungsgemäßen Verfahrens ist in Figur 1 dargestellt. Die an einem Bussystem eines Verkehrsmittels 9 teilnehmenden Komponenten sind über einen Datenbus 8 miteinander verbunden. Die teilnehmenden Komponenten bestehen vorzugsweise aus Steuergeräten, Sensoren und Aktoren. In der schematischen Figur 1 stellen die Komponenten Steuergeräte 1,3,5 mit entsprechenden auf diesen laufenden Software-Modulen 2,4,6,7 dar.

Mittels der eingesetzten Betriebssysteme können die Steuergeräte 1,3,5 bzw. deren Software-Module 2,4,6,7 untereinander kommunizieren. Dabei bedient man sich Standards, die auf dem Gebiet der Software für Fahrzeuge, bereits etabliert sind. Einige dieser Standards sind das in die ISO 15765-2 übernommene OSEK - Offene Systeme und deren Schnittstellen für die Elektronik im Kraftfahrzeug - (http://www.osek-vdx.org), als Transportprotokoll zwischen Steuergeräten oder das in die ISO 14230 (http://www.iso.org) übernommene Keyword Protocol 2000 zur Übertragung von Diagnosedaten sowie der Bereitstellung von Diagnosediensten.

Als Kommunikationsprotokoll steht das Keyword Protocol 2000 (KWP 2000) zur Verfügung, welches in der Fahrzeugindustrie als Kommunikationsprotokoll für Diagnosedienste zum Einsatz kommt und die ISO 14230 erfüllt. Es kann aber jedes andere Kommunikationsprotokoll eingesetzt werden, sofern es die nachfolgenden Aufgaben oder die ISO 14230 erfüllt.

Die Steuergeräte 1,3,5 weisen mindestens einen Mikro-Controller mit Prozessor-, Speicher- und Eingabe-/AusgabeEinheit zur Ausführung der Steuergerätefunktion, einen Kommunikations-Controller zur Umsetzung des Kommunikations-Protokolls und eine Sende-/Empfangseinheit zur Anbindung an den Datenbus 8 auf. Der Datenbus 8 ist als CAN-Datenbus mit entsprechender Protokollfunktionalität ausgebildet.

Die Software-Module 2,4,6,7 entsprechen softwaregesteuerten Applikationen, die auf dem jeweiligen Steuergerät 1,3,5 laufen. Die Steuergeräte 1,3,5 können mehrere Software-Module laden.

Die Steuergeräte 1;3;5 laden die im Speicher des Mikro-Controllers abgelegten Software-Module 2;4;6 in ihre Prozessoreinheit. Diese Software-Module 2;4;6 erfüllen die Hauptaufgaben des entsprechenden Steuergeräts 1;3;5. Das Software-Modul 7 kann zusätzlich von den Steuergeräten 1,3,5 geladen werden. Das Software-Modul 7 entspricht einer Nebenaufgabe der Steuergeräte 1,3,5. Das Software-Modul 7 ist ebenfalls im Speicher des Mikro-Controllers der Steuergeräte 1,3,5 abgelegt.

Beispielhaft übernimmt das Steuergerät 1 mittels des Software-Moduls 2 als Hauptaufgabe die Motorsteuerung, das Steuergerät 3 mittels des Software-Moduls 4 als Hauptaufgabe die Antriebsstrangssteuerung und das Steuergerät 5 mittels des Software-Moduls 6 als Hauptaufgabe die Steuerung des Bremssystems.

Das Software-Modul 7 übernimmt beispielhaft als Nebenaufgabe das Berechnen und Erstellen von Diagnosedaten, welche zur Anzeige im Verkehrsmittel 9 und/oder ablegen an zentraler Stelle im Verkehrsmittel 9 geeignet sind.

Das Software-Modul 7 kann in jedem Steuergerät 1,3,5 gestartet werden. Hierzu unterstützen die Steuergeräte 1,3,5 die Eingabe-/Ausgabeanforderungen des Software-Moduls 7.

Beispielsweise werden Betriebsdaten von Sensoren oder Aktoren auf dem Datenbus 8 wie Öltemperatur, Stellmotorstellung usw. vom jeweiligen Steuergerät 1,3,5 als Daten an das Software-Modul 7 weitergeleitet.

Die vom Software-Modul 7 benötigte Prozesszeit entspricht der gesamten Zeit, in der das Software-Modul 7 einen bestimmten Prozessor von seinem Start bis zur Abarbeitung seiner Aufgabe in Anspruch genommen hat. Die Prozessorzeit ist insbesondere von der Taktfrequenz des im Mikro-Controller eines Steuergeräts 1,3,5 eingesetzten Prozessortyps abhängig.

Die Steuergeräte 1,3,5 arbeiten in Prozesszyklen, d.h. nach Ablauf einer bestimmten Zeit muss ein Prozesszyklus beendet sein und eine Ausgabe der im Prozess ermittelten Daten auf den Datenbus 8 erfolgen. Danach startet der Prozesszyklus erneut. Der Prozesszyklus der Steuergeräte 1;3;5 wird durch die Software-Module 2;4;6 der Hauptaufgabe und/oder Betriebssystem und/oder Busprotokoll bestimmt. Entsprechend werden die Prozesse, welche aus dem Laufen der Software-Module 2,4,6 auf dem Prozessor des jeweiligen Mikro-Controllers des Steuergeräts 1,3,5 entstehen, als Hauptprozesse bezeichnet.

Die Steuergeräte 1,3,5 senden nach Ablauf eines Prozesszyklusses bzw. einer Prozesszykluszeit Daten auf den Datenbus 8, welche ihre aktuelle Prozessorauslastung und eingesetzten Prozessortyp charakterisieren. Aus diesen Daten können die Steuergeräte 1,3,5 die Auslastung der weiteren Steuergeräte 1,3,5 ermitteln.

Die Auslastung eines Prozessors durch die Bearbeitung der Hauptaufgabe eines Steuergeräts 1,3,5 ist nicht gleichmä ßig. Die Auslastung des Prozessors variiert je nach Anforderung der Hauptaufgabe. Beispielsweise ist die Prozessorauslastung des Steuergeräts 5 durch den Hauptprozess im Falle eines Bremseingriffes höher als ohne Bremseingriff. Ebenso ist die Prozessorauslastung des Steuergeräts 3 bei einem Schaltvorgang höher als ohne Schaltvorgang.

Das Software-Modul 7 kann auf den verschiedenen Steuergeräten 1,3,5 laufen. Die Entscheidung auf welchem der Steuergeräte 1,3,5 das Software-Modul 7 gestartet wird, hängt von der Rechenkapazität, also Prozessorauslastung und Prozessortyp, des jeweiligen Steuergeräts 1,3,5 ab.

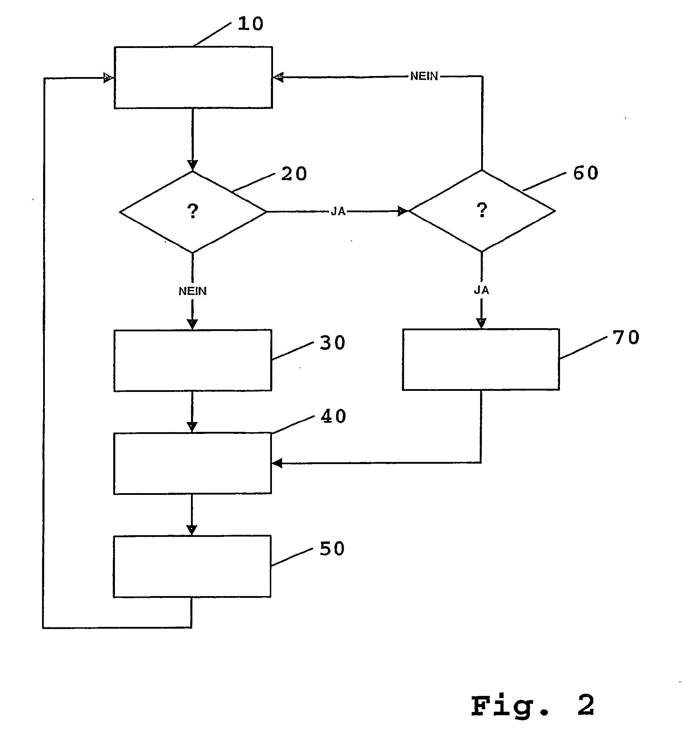

Anhand des in Figur 2 dargestellten Flussdiagramms wird nun das erfindungsgemäße Verfahren erläutert, wobei im Folgenden angenommen wird, dass die Prozessoren der Steuergeräte 1,3,5 vom identischen Typ sind, also insbesondere dieselbe Taktfrequenz aufweisen und die Steuergeräte 1,3,5 sich im laufenden Betrieb befinden:

### Prüfung 10:

Es wird geprüft, ob und auf welchem Steuergerät 1,3,5 das Software-Modul 7 läuft. Diese Prüfung muss turnusmäßig, also in bestimmten Zeitabschnitten erfolgen, da jedes der Steuergeräte 1,3,5 bei hoher Prozessorauslastung, das Software-Modul 7 abschalten kann. Sobald die Abschaltung des Software-Moduls 7 erfolgt ist, muss das Software-Modul 7 wieder gestartet werden. Die Prüfung, ob und auf welchem Steuergerät 1,3,5 das Software-Modul 7 läuft, erfolgt, indem das Software-Modul 7 turnusmäßig oder auf Anfrage eine entsprechende Kennung, welche diese Daten enthält, auf den Datenbus 8 sendet.

### Entscheidung 20:

Beispielhaft konnte eine entsprechende Kennung für das Software-Modul 7 im Schritt 10 auf dem Datenbus 8 nicht ermittelt werden, so dass in den Schritt 30 verzweigt werden muss.

### Rechenkapazität 30:

Hierzu wird festgestellt, welches der beteiligten Steuergeräte 1,3,5 im Datenbus 8 die maximal freie Rechenkapazität, also die geringste Prozessorauslastung im Verhältnis zur Prozessor-Taktfrequenz, aufweist. Diese Information kann durch turnusmäßiges Senden seitens der beteiligten Steuergeräte 1,3,5 oder durch eine Abfrage erfolgen. Beispielhaft soll das Steuergerät 3 aktuell über die maximal freie Rechenkapazität verfügen.

### Start Software-Modul 40:

Das Software-Modul 7 wird von dem im vorhergehenden Schritt 30 bestimmten Steuergerät 3 gestartet.

### Software-Modul läuft 50:

Sobald das Software-Modul 7 ordnungsgemäß gestartet ist, sendet dieses turnusgemäß oder auf Anfrage eine Kennung über seinen Betriebszustand und sein Betriebssteuergerät, also auf welchem Steuergerät das Software-Modul 7 läuft, an den Datenbus 8.

### Prüfung 10:

In der turnusgemäßen Prüfung wird ermittelt, ob und ggf. welche Kennung des Software-Moduls 7 auf dem Datenbus vorhanden ist.

### Entscheidung 20:

Da der Schritt 10 ergibt, dass das Software-Modul 7 auf dem Steuergerät 3 läuft, ist zum Schritt 60 zu verzweigen.

### Entscheidung 60:

Das Steuergerät 3 ermittelt seine eigene aktuelle Prozessorauslastung innerhalb eines Prozesszyklusses und vergleicht diese mit der aktuellen Rechenkapazität der weiteren Steuergeräte 1,2 innerhalb eines Prozesszyklusses. Hierzu fordert es die Information zur Rechenkapazität, also Prozessorauslastung und Prozessortyp, entweder von den Steuergeräten 1,2 an oder die Steuergeräte senden diese Informationen turnusgemäß auf den Datenbus 8.

Ist die Auslastung des Prozessors des Steuergeräts 3 im Vergleich zur Auslastung der Prozessoren der weiteren Steuergeräte 1,2 niederer, so erfolgt keine Aktion. Das Software-Modul 7 läuft weiterhin auf dem Steuergerät 3. Die Verzweigung in den Prüfungsschritt 10 erfolgt turnusmäßig.

Ist die Auslastung des Prozessors des Steuergeräts 3 im Vergleich zur Auslastung der Prozessoren der weiteren Steuergeräte 1,2 höher, so erfolgt die Verzweigung zum Schritt 70.

### Abschalten Software-Modul 70:

Es erfolgt die Abschaltung des Software-Moduls 7 im Steuergerät 3. Zudem ermittelt das Steuergerät 3 aus seinen Daten das Steuergerät 1,2 mit der aktuell maximal freien Rechenkapazität. Dies soll beispielhaft das Steuergerät 1 sein.

### Start Software-Modul 40:

Das Software-Modul 7 wird von dem im vorhergehenden Schritt 70 bestimmten Steuergerät 1 gestartet.

### Software-Modul läuft 50:

Sobald das Software-Modul 7 ordnungsgemäß gestartet ist, sendet dieses turnusgemäß oder auf Anfrage eine Kennung darüber, dass und auf welchem Steuergerät es läuft, an den Datenbus 8.

Es können auch mehrere, verschiedene Software-Module als Nebenaufgaben auf die Steuergeräte 1,3,5 verteilt werden. Zudem können die Steuergeräte 1,3,5 auch mehrere Hauptaufgaben erfüllen.

Die Umsetzung des erfindungsgemäßen Verfahrens erfolgt vorzugsweise auf Betriebssystemebene der Steuergeräte 1,3,5.

Der Datenbus 8 kann auch z.B. als FlexRay-Bus, als optischer MOST- oder D2B-Bus oder als elektrischer LIN-Bus in einem Verkehrsmittel, insbesondere einem Fahrzeug, vorgesehen sein.

Vorteilhafterweise ist das erfindungsgemäße Verfahren auch in sicherheitsrelevanten Systemen in Fahrzeugen einsetzbar. Diese Systeme werden, um die Ausfallsicherheit zu erhöhen, redundant ausgelegt, so dass bei Ausfall beispielsweise eines Steuergeräts auf ein redundant ausgelegtes Steuergerät umgeschaltet werden kann. Damit sind in redundant ausgelegten Systemen mehrere gleichartige Steuergeräte vorhanden, auf denen derselbe Hauptprozess läuft, nämlich die redundant ausgelegte Software-Applikation. Die notwendige Gleichartigkeit der redundant ausgelegten Steuergeräte impliziert, dass ein Software-Modul welches auf einem dieser redundant ausgelegten Steuergeräte lauffähig ist, auch auf den dazugehörigen weiteren zum redundant ausgelegten System gehörenden Steuergeräten lauffähig ist. Dies kann für die Anwendung des erfindungsgemäßen Verfahrens genutzt werden, indem nebengeordnete Software-Applikationen zusätzlich auf einem Steuergerät des redundanten Systems läuft.

Die Prozessorleistung der Steuergeräte 1,3,5 ist im bisher beschriebenen Verfahren derart ausgebildet, dass das Software-Modul 7 zur jeweiligen Hauptaufgabe des Steuergeräts 1,3,5 immer zugeschaltet werden kann, ohne dass der Hauptprozess auf Prozesszeit verzichten muss. Dieser HauptProzess erhält also immer Vorrang vor allen anderen Prozessen, die auf dem Prozessor laufen. Sollte dem nicht so sein, muss im Schritt 60 und im Schritt 30 zusätzlich geprüft werden, ob die auf dem jeweiligen Steuergerät 1,3,5 zur Verfügung stehende freie Rechenkapazität für die Bearbeitung der Nebenaufgabe ausreicht. Sollte dies nicht der Fall sein, kann das Software-Modul 7 in dem entsprechenden Steuergerät nicht gestartet werden. Für diese Berechnung muss die Prozesszeit für das Software-Modul 7 bei einem bestimmten Prozessortyp bereits vorab den Steuergeräten 1,3,5 bekannt sein.

Das erfindungsgemäße Verfahren kann ebenfalls angewendet werden, wenn die Prozessortypen in den Steuergeräten 1,3,5 unterschiedlich sind. Bei der Bestimmung der freien Rechenkapazität muss dann neben der Prozessorauslastung auch der Prozessortyp, also insbesondere die Prozessor-Taktfrequenz, berücksichtigt werden.

Das erfindungsgemäße Verfahren kann auch auf Steuergeräte ausgedehnt werden, deren Mikro-Controller mehrere Prozessoren aufweisen.

Das erfindungsgemäße Verfahren kann auch über ein zentrales Steuergerät gesteuert werden. Dies hat den Vorteil, dass das zentrale Steuergerät neben den Entscheidungs- und Berechnungsschritten 20,60,30 im Schritt 40 die entsprechende Software-Applikation an das Steuergerät verteilen kann.

## Patentansprüche

1. Verfahren zum Laden eines Software-Moduls in eine Prozessoreinheit eines über einen Datenbus vernetzten Steuergeräts in einem Verkehrsmittel, wobei das Software-Modul (7) in mehreren Steuergeräten (1,3,5) lauffähig ist und die Steuergeräte (1,3,5) über den Datenbus (8) Daten austauschen, wobei die Auswahl auf welchem Steuergerät (1,3,5) das Software-Modul (7) geladen wird, in Abhängigkeit der Rechenkapazität der sich aktuell im Betrieb befindlichen Steuergeräte (1,3,5) erfolgt, wobei geprüft wird, ob und auf welchem Steuergerät (1,3,5) das Software-Modul (7) läuft, diese Prüfung turnusmäßig, also in bestimmten Zeitabschnitten erfolgt, und jedes der Steuergeräte (1,3,5) bei hoher Prozessorauslastung, das Software-Modul (7) abschalten kann, dass sobald die Abschaltung des Software-Moduls (7) erfolgt ist, das Software-Modul (7) wieder gestartet wird, und dass die Prüfung, ob und auf welchem Steuergerät (1,3,5) das Software-Modul (7) läuft, erfolgt, indem das Software-Modul (7) turnusmäßig oder auf Anfrage eine entsprechende Kennung, welche diese Daten enthält, auf den Datenbus (8) sendet, und dass festgestellt wird, welches der beteiligten Steuergeräte (1,3,5) im Datenbus (8) die maximal freie Rechenkapazität, also die geringste Prozessorauslastung im Verhältnis zur Prozessor-Taktfrequenz, aufweist und dass diese Information durch turnusmäßiges Senden seitens der beteiligten Steuergeräte (1,3,5) oder durch eine Abfrage erfolgt, wobei die Software-Module (2,4,6) die Hauptaufgaben des entsprechenden Steuergeräts (1,3,5) erfüllen, wobei ein Software-Modul (7) mit einer Nebenaufgabe zusätzlich im Speicher des Mikrocontrollers von den Steuergeräten (1,3,5) ablegbar ist und dass die Steuergeräte (1,3,5) Prozesszyklen aufweisen, die nach Ablauf einer bestimmten Zeit beendet sind, dass der Prozesszyklus der Steuergeräte (1,3,5) durch die Software-Module (2,4,6) der Hauptaufgabe und/oder das Betriebssystem und/oder das Busprotokoll bestimmt wird.

2. Verfahren nach Anspruch 1, **dadurch gekennzeichnet, dass** nach Ablauf eines Prozesszyklus bzw. einer Prozesszykluszeit Daten auf den Datenbus (8) gesendet werden, welche ihre aktuelle Prozessorauslastung und den eingesetzten Prozessortyp charakterisieren, wobei die Steuergeräte (1,3,5) aus diesen Daten die Auslastung der weiteren Steuergeräte (1,3,5) ermitteln.

3. Verfahren nach Anspruch 1 bis 2, **dadurch gekennzeichnet, dass** das Steuergerät (1,3,5) auf dem das Software-Modul (7) läuft seine Rechenkapazität mit der Rechenkapazität der weiteren Steuergeräte (1,3,5) vergleicht und in Abhängigkeit des Vergleichs das Software-Modul (7) beendet.

4. Verfahren nach Anspruch 1 bis 3, **dadurch gekennzeichnet, dass** die Rechenkapazität eines Steuergeräts (1,3,5) aus der Prozessorauslastung und dem Prozessortyp ermittelt wird.

5. Verfahren nach Anspruch 1 bis 4, **dadurch gekennzeichnet, dass** das Software-Modul (7) in den Speichermitteln der Steuergeräte (1,3,5) gespeichert ist.

6. Verfahren nach Anspruch 1 bis 5, **dadurch gekennzeichnet, dass** eine Kennung des Software-Moduls (7) turnusmäßig oder auf Anfrage auf den Datenbus (8) gesendet wird, wobei die Kennung Informationen über Betriebszustand und Betriebs-Steuergerät (1,3,5) des Software-Moduls (7) enthält.

## Claims

1. Method for loading a software module into a processor of a control unit interlinked in a vehicle via a data bus, the software module (7) being able to run in several control units (1, 3, 5) and the control units (1, 3, 5) being able to exchange data via the data bus (8), the choice of which control unit (1, 3, 5) the software module (7) is loaded into being made as a function of the computing capacity of the control units (1, 3, 5) that are currently in operation, such that it is checked whether and in which control unit (1, 3, 5) the software module (7) is running, this check being carried out cyclically, that is at fixed time intervals, and when its processor is under high load any control unit (1, 3, 5) can terminate the software module, in such manner that as soon as the software module (7) has been terminated the software module (7) is restarted, and such that the check of whether and in which control unit (1, 3, 5) the software module is running takes place by virtue of the fact that, cyclically or on demand, the software module (7) sends to the data bus (8) a corresponding identification code containing that information, and it is determined which of the control units (1, 3, 5) sharing the data bus (8) has the most free computing capacity, that is, the lowest processor load in relation to the processor cycle frequency, this information being acquired cyclically or on demand by the control units (1, 3, 5) involved, the main tasks of the corresponding control unit (1, 3, 5) being carried out by software modules (2, 4, 6) so that a software module (7) with a secondary task can be stored additionally in the memory of the micro-controller of the control units (1, 3, 5) and the control units (1, 3, 5) have process cycles which come to an end after the lapse of a certain time, the process cycle of the control units (1, 3, 5) being determined by the software modules (2, 4, 6) associated with the main task and/or by the operating system and/or by the bus protocol.

2. Method according to Claim 1, **characterised in that** after the end of a process cycle or of a process cycle time, data are sent to the data bus (8), which characterise the current processor load and processor type used, such that the control units (1, 3, 5) determine from these data the loading of the other control units (1, 3, 5).

3. Method according to Claims 1 and 2, **characterised in that** the control unit (1, 3, 5) in which the software module (7) is running compares its computing capacity with the computing capacities of the other control units (1, 3, 5) and terminates the software module depending on the result of the said comparison.

4. Method according to Claims 1 to 3, **characterised in that** the computing capacity of a control unit (1, 3, 5) is determined from the processor load and the processor type.

5. Method according to Claims 1 to 4, **characterised in that** the software module (7) is stored in the memories of the control units (1, 3, 5).

6. Method according to Claims 1 to 5, **characterised in that** an identification code of the software module (7) is sent cyclically or on demand to the data bus (8), the said code containing information about the operating status of the software module (7) and the control unit (1, 3, 5) it is operating in.

## Revendications

1. Procédé pour charger un module logiciel dans une unité à processeur d'un appareil de commande mis en réseau par le biais d'un bus de données dans un moyen de transport, le module logiciel (7) pouvant être exécuté dans plusieurs appareils de commande (1, 3, 5) et les appareils de commande (1, 3, 5) échangeant des données par le biais du bus de données (8), la sélection de l'appareil de commande (1, 3, 5) depuis lequel est chargé le module logiciel (7) s'effectuant en fonction de la capacité de calcul des appareils de commande (1, 3, 5) qui sont actuellement en service, un contrôle étant effectué pour vérifier si le module logiciel (7) est en cours d'exécution et sur quel appareil de commande (1, 3, 5), ce contrôle étant réalisé périodiquement, c'est-à-dire à des intervalles de temps donnés, et chacun des appareils de commande (1, 3, 5) pouvant désactiver le module logiciel (7) en cas de charge importante du processeur, le module logiciel (7) étant redémarré dès que la désactivation du module logiciel (7) a eu lieu et le contrôle destiné à vérifier si le module logiciel (7) est en cours d'exécution et sur quel appareil de commande (1, 3, 5) étant réalisé en ce que le module logiciel (7) envoie sur le bus de données (8), périodiquement ou sur demande, un identifiant correspondant qui contient ces données et étant déterminé lequel des appareils de commande (1, 3, 5) participant au bus de données (8) possède la capacité de calcul libre maximale, c'est-à-dire la plus faible charge du processeur en comparaison à la fréquence d'horloge du processeur, et cette information s'effectuant par une émission périodique des appareils de commande (1, 3, 5) participants on sur demande, les modules logiciels (2, 4, 6) accomplissant les tâches principales de l'appareil de commande (1, 3, 5) correspondant, un module logiciel (7) ayant une tâche annexe pouvant en plus être stocké dans la mémoire du microcontrôleur des appareils de commande (1, 3, 5) et les appareils de commande (1, 3, 5) présentant des cycles de traitement qui sont terminés après l'écoulement d'une durée donnée, le cycle de traitement des appareils de commande (1, 3, 5) étant déterminé par les modules logiciels (2, 4, 6) de la tâche principale et/ou le système d'exploitation et/ou le protocole de bus.

2. Procédé selon la revendication 1, **caractérisé en ce qu'**après écoulement d'un cycle de traitement ou d'une durée de cycle de traitement, des données sont envoyées sur le bus de données (8) qui caractérisent leur charge de processeur actuelle et le type de processeur utilisé, les appareils de commande (1, 3, 5) déterminant à partir de ces données la charge des autres appareils de commande (1, 3, 5).

3. Procédé selon les revendications 1 à 2, **caractérisé en ce que** l'appareil de commande (1, 3, 5) sur lequel est exécuté le module logiciel (7) compare sa capacité de calcul avec la capacité de calcul des autres appareils de commande (1, 3, 5) et termine le module logiciel (7) en fonction de la comparaison.

4. Procédé selon les revendications 1 à 3, **caractérisé en ce que** la capacité de calcul d'un appareil de commande (1, 3, 5) est déterminée à partir de la charge du processeur et du type de processeur.

5. Procédé selon les revendications 1 à 4, **caractérisé en ce que** le module logiciel (7) est enregistré dans les moyens de mémorisation des appareils de commande (1, 3, 5).

6. Procédé selon les revendications 1 à 5, **caractérisé en ce qu'**un identifiant du module logiciel (7) est envoyé périodiquement ou sur demande sur le bus de données (8), l'identifiant contenant des informations sur l'état de fonctionnement et l'appareil de commande (1, 3, 5) en service du module logiciel (7).
